# EUROPÄISCHE PATENTSCHRIFT

(11) **EP 2 820 164 B1**
(45) Veröffentlichungstag und Bekanntmachung des Hinweises auf die Patenterteilung: **10.04.2019**
(21) Anmeldenummer: 13747197.5
(22) Anmeldetag: 05.02.2013
(51) Int. Cl.: C22C 37/06, F02F 1/00, F02F 1/18, F02F 1/24, F16D 65/12, C22C 37/10

(54) **FERRITISCHER GUSSEISENWERKSTOFF MIT LAMELLARER GRAPHITAUSBILDUNG UND FAHRZEUGTEIL AUS DEM GUSSEISENWERKSTOFF**
FERRITIC CAST IRON MATERIAL WITH LAMELLAR GRAPHITE AND MOTOR VEHICLE PART MADE OF THE CAST IRON MATERIAL
MATÉRIAU FERRITIQUE EN FONTE AVEC GRAPHITE LAMELLAIRE ET PIÈCE DE VÉHICULE CONSTITUÉE DE CETTE MATIÈRE À BASE DE FONTE

(30) Priorität: 07.02.2012 DE 102012100990
(43) Veröffentlichungstag der Anmeldung: 07.01.2015
(73) Patentinhaber: Ford-Werke GmbH, 50735 Köln (DE); Neue Halberg Guss GmbH, 66130 Saarbrücken (DE)
(72) Erfinder: URSAVAS, Uemit, 51371 Leverkusen (DE); WARKENTIN, Matthias, 50170 Kerpen (DE); BRODA, Maik, 52249 Eschweiler (DE); RADEBACH, Dirk, 42899 Remscheid (DE); UNGERBÜHLER, Frank, 66459 Kirkel-Limbach (DE); MICHELS, Christoph, 66119 Saarbrücken (DE)
(74) Vertreter: Wieske, Thilo
(86) Internationale Anmeldenummer: PCT/DE2013/100039
(87) Internationale Veröffentlichungsnummer: WO 2013/117190

(56) Entgegenhaltungen:
- WO-A1-01/06028
- WO-A1-01/06028
- DE-A1-102004 010 916
- DE-A1-102004 010 916
- DE-A1-102004 010 917
- DE-A1-102004 010 917
- JP-A- H04 272 522
- JP-A- H04 272 522
- JP-A- S62 240 746
- JP-A- S62 240 746
- JP-A- S63 140 064
- JP-A- S63 140 064
- US-A- 4 548 643
- US-A- 4 548 643
- US-A1- 2005 217 764
- US-A1- 2005 217 764
- US-A1- 2011 041 960
- US-A1- 2011 041 960

## Beschreibung

Die Erfindung betrifft einen ferritischen Gußeisenwerkstoff mit lamellarer Graphitausbildung. Sie betrifft weiterhin ein Fahrzeugteil aus dem Gußeisenwerkstoff.

Bei Zylinderköpfen und Bremsscheiben werden andere Werkstoffe eingesetzt als bei Zylinderkurbelgehäusen, weil bei den erstgenannten Bauteilen nicht die Festigkeit, sondern die Wärmeleitfähigkeit die kritische Größe ist. Daher ist bei Zylinderköpfen überwiegend ferritisches Gußeisen mit Vermiculargraphit und bei Bremsscheiben ferritisches Grundgefüge zu finden, während bei Zylinderkurbelgehäusen eine perlitische Matrix vorherrscht.

Es ist bekannt, daß zur Verringerung der Dichte unter 7,2 g/cm³ gewöhnliches Gußeisen mit einem Zusatz von Aluminium legiert wird. Dies dient der Gewichtsverringerung des Bauteils und somit dem Leichtbau. Die Zunderbeständigkeit von Aluminium-legiertem Gußeisen ist ebenfalls bekannt. Dies bedeutet, daß sich eine festhaftende Oxidschicht auf der Bauteiloberfläche befindet, welche den Verschleiß bei Temperaturbelastung verringert. Auch verhindert diese Oxidschicht den Aufbau von Flugrost bei Raumtemperatur, der in der Anwendung unerwünscht ist. Gerade bei Bremsscheiben ist Flugrost beim Verkauf eines Fahrzeugs optisch störend.

Aus der DE 197 35 217 B4 ist ein Gußwerkstoff der ternären Gruppe Eisen-Aluminium-Kohlenstoff bekannt, der aus (in Gewichts-Prozent) 20 bis 28 % Al, bis zu 1 % Si, mehr als 1 und bis zu 3 % C und Fe als Rest besteht und der freien Kohlenstoff aufweist.

Aus der JP 62 240 746 A ist ein Gusseisenwerkstoff für Bremsscheiben bekannt, der aus (in Gewichts-Prozent) 2 bis 3 % Al, bis zu 1 % Si, mehr als 2 und bis zu 4,5 % C und Fe als Rest besteht.

Die US 4 548 643 A offenbart einen Graugusswerkstoff, der aus (in Gewichts-Prozent) 2 bis 9 % Al, 1 bis 5 % Ni, 0,5 bis 2,5 % Cr, 0,25 bis 1,2 % Mn, 2,4 bis 4 % C, 0 bis 2 % Cu, 0 bis 0,075 % Sn, 0 bis 0,5 % V, 0 bis 0,3 % B und Eisen als Rest besteht.

Die US 2005/217764 A1 offenbart einen abriebfesten Gleitwerkstoff mit einer ferritischen oder martensitischen Phase, der (in Gewichts-Prozent) 1,5 bis 10 % Al und 2,5 bis 5 % C und Graphit als lamellaren/"flake" Kugel- oder Wurmgraphit enthält, wobei der Gleitwerkstoff bis zu 5 % Si sowie Ni, Co, Mn, Cr, W und Mo in Mengen von 0,05 bis 7 % und V, Ti, Zr, Nb und Ta in Mengen von 0,05 bis 4 % enthält.

Aus der DE 10 2004 010 916 A1 ist ein nitrierfähiger Gußeisenwerkstoff mit lamellaren, vermicularen oder globularen Graphitstrukturen bekannt, wobei der Gußeisenwerkstoff Eisen und 1,5 bis 4,0 Gew.-% Kohlenstoff, 0 bis 1,5 Gew.-% Silizium, 0,05 bis 2,0 Gew.-% Aluminium jeweils bezogen auf das Gesamtgewicht des Gußeisenwerkstoffs enthält.

Weiterhin ist aus der JP 63 140064 A ein perlitischer Gußeisenwerkstoff bekannt, wobei der Gußeisenwerkstoff Eisen und 0,8 bis 3,7 Gew.-% Kohlenstoff, 0,6 bis 2,6 Gew.-% Silizium, 3,2 bis 11,8 Gew.-% Aluminium und 0,34 bis 0,41 Gew.-% Mangan, jeweils bezogen auf das Gesamtgewicht des Gußeisenwerkstoffs enthält.

Aufgabe der Erfindung ist es, einen ferritischen Gußeisenwerkstoff mit lamellarer Graphitausbildung zu schaffen, der eine höhere Wärmeleitfähigkeit aufweist.

Diese Aufgabe wird erfindungsgemäß dadurch gelöst, daß der Gußeisenwerkstoff aus
3,0 bis 4,2 Gew.-% C,
0,3 bis 1,5 Gew.-% Si,
3,0 bis 7 Gew.-% Al,
bis zu 1,0 Gew.-% Cu,
bis zu 0,8 Gew.-% Mn,
bis zu 0,2 Gew.-% Sn,
bis zu 0,08 Gew.-% P,
und wenigstens einem weiteren Element ausgewählt aus der Gruppe bestehend aus
   - 0,005 bis 0,03 Gew.-% Bi,
   - 0,02 bis 0,15 Gew.-% S,
   - 0,1 bis 0,3 Gew.-% Cr,
   - bis zu 0,02 Gew.-% Ti,
   - 0,01 bis 0,04 Gew.-% Mo,
   - 0,06 bis 0,12 Gew.-% V und
   - bis zu 40 ppm Pb
besteht, wobei der Rest der Zusammensetzung aus Fe besteht.

Es hat sich im Rahmen der Erfindung gezeigt, daß nicht nur die Wärmeleitfähigkeit des Werkstoffs gegenüber bekannten Gußeisenwerkstoffen verbessert ist (es wurden Werte von bis zu 50 W/mkK gemessen), sondern auch die Verschleiß- und Korrosionsbeständigkeit. Gerade die Kombination von hoher Wärmeleitfähigkeit mit hoher Verschleiß- und Korrosionsbeständigkeit wird in vielen Bereichen der Technik benötigt, beispielsweise im Bereich der Bremsenwerkstoffe, ist aber schwierig zu erreichen. Durch die gewählte chemische Zusammensetzung bildet sich schon bei Raumtemperatur eine ("selbstheilende", da sich immer wieder neu bildende) Oxidschicht aus, welche besonders dicht und haftfest ist und Bauteile wie Bremsen vor Verschleiß und Korrosion schützt. Diese Oxidschicht bildet sich im Rahmen einer Wärmebehandlung oder allgemein bei thermischer Beanspruchung, wie z.B. in Bremsscheiben beim Bremsvorgang, aus. Insbesondere die Elemente Al und Si bilden im gewählten Gehaltsbereich Oxide (Al₂O₃, SiO₂) aus. Im Zusammenhang mit der feinen Gefügeausbildung durch die Zugabe von Bi wird die Ausbildung der Oxidschicht gesteuert. In einem Gußeisenwerkstoff nach Stand der Technik ist bei 600°C und 20 min. Temperaturbeanspruchung in oxidierender Atmosphäre ein oberflächlicher Materialverlust von ca. 14,6 Mikrometer festgestellt worden. Dieser Materialverlust stellt in der Anwendung des Gußbauteils, z.B. als Bremsscheibe eine Hochtemperaturkorrosion und somit einen Verschleiß dar, der unerwünscht ist. Bei dem erfindungsgemäßen Werkstoff wurde bei gleichen Bedingungen ein oberflächlicher Materialverlust von ca. 3,6 Mikrometer festgestellt. Der erfindungsgemäße Werkstoff zeigt damit eine um 76 % geringen oberflächlichen Materialverlust, was die Lebensdauer des Gußteils, z.B. als Bremsscheibe, wesentlich erhöht. Der geringere Materialverlust ist auf die Bildung einer oberflächennahen Al₂O₃-Schicht zurückzuführen, die gegenüber dem Stand der Technik eine bessere Haftfestigkeit und geringere Heißrißbildung aufweist. Beim Werkstoff nach dem Stand der Technik wurde unter der oben genannten Temperaturbelastung ein Rißnetzwerk als Heißrißbildung festgestellt. Dieses Rißnetzwerk läßt sich charakterisieren durch eine mittlere Rißlänge von ca. 1800 Mikrometer pro mm² Oberfläche. Bei mechanischer Belastung durch einen Reibpartner wie z.B. bei Bremsen führt dieses Rißnetzwerk zu einem erhöhten Verschleiß und damit zu einer Verringerung der Lebensdauer. Beim erfindungsgemäßen Werkstoff ist ein deutlich geringer ausgeprägtes Netzwerk vorhanden, d.h. eine mittlere Rißlänge von weniger als 100 Mikrometer pro mm² Oberfläche. Teilweise sind keine Risse nach der Temperaturbelastung vorhanden gewesen. Dementsprechend ist der Verschleiß bei Temperaturbelastung geringer als bei Werkstoffen gemäß dem Stand der Technik. Es wurde in ersten Versuchen die Sauerstoffaktivität der Schmelze gemessen und Werte von 67,8 und 42,4 ppb (bezogen auf 1470°C) ermittelt. Diese gegenüber den üblichen Werten bei Grauguß von 800 bis 1200 ppb deutlich reduzierten Werte zeigen die starke Desoxidation durch das Al.

Eine bevorzugte Ausgestaltung der Erfindung besteht darin, daß der Gußeisenwerkstoff zwischen 0,01 und 0,02 Gew.-% Bi enthält.

Der Erfindung liegt die Erkenntnis zugrunde, daß der Zusatz von Bi und dem gegenüber dem Stand der Technik bei Aluminium-legierten Gußeisenwerkstoffen höheren C-Gehalt eine Feinung und homogenere Verteilung von dendritischen Strukturen erreicht wird, was zu einer homogeneren Wärmeabführung führt.

Zur Erfindung gehörig ist auch, daß der Gußeisenwerkstoff zwischen zwischen 3,0 und 5,5 und bevorzugt zwischen 3,5 und 5 Gew.-% Al enthält. Als Al-Einsatzmaterial kann Reinaluminium oder auch Desoxidationsmaterial aus Stahlwerken eingesetzt werden, wobei wichtig ist, daß die Begleitelemente im Al keine Störelemente im Werkstoff darstellen. Wichtig ist, daß die Zugabe des Al kurz vor dem Abstich erfolgt, um eine homogene Durchmischung zu gewährleisten und gleichzeitig den Abbrand zu minimisieren.

Es ist zur Erfindung gehörig, daß der Gußeisenwerkstoff bis zu 0,06 und bevorzugt bis zu 0,04 Gew.-% P enthält.

Es hat sich als vorteilhaft erwiesen, daß der Gußeisenwerkstoff bis zu 0,8 und bevorzugt bis zu 0,6 Gew.-% Cu enthält.

Weiterhin ist es zweckmäßig, daß der Gußeisenwerkstoff bis zu 0,6 und bevorzugt bis zu 0,4 Gew.-% Mn enthält.

Es ist sinnvoll, daß der Gußeisenwerkstoff bis zu 0,15 und bevorzugt bis zu 0,1 Gew.-% Sn enthält.

Weiterhin ist es zur Erfindung gehörig, daß der Gußeisenwerkstoff 0,04 bis 0,10 und bevorzugt 0,06 bis 0,08 Gew.-% S enthält.

Ebenso ist es vorteilhaft, daß der Gußeisenwerkstoff 0,15 bis 0,25 und bevorzugt 0,175 bis 0,20 Gew.-% Cr enthält.

Eine bevorzugte Ausführungsform der Erfindung besteht darin, daß der Gußeisenwerkstoff bis zu 0,017 und bevorzugt bis zu 0,015 Gew.-% Ti enthält. Es hat sich im Rahmen der Erfindung gezeigt, daß ein geringer Ti-Gehalt von großer Bedeutung ist.

Erfindungsgemäß ist vorgesehen, daß der Gußeisenwerkstoff bis zu 40, bevorzugt bis zu 30, besonders bevorzugt bis zu 20 ppm Pb enthält.

Weiterhin ist es zweckmäßig, daß der Gußeisenwerkstoff 0,015 bis 0,03, bevorzugt 0,02 bis 0,025 Gew.-% Mo enthält.

Die Begleitelemente wurden bewusst sehr gering eingestellt, damit sich ein ferritisches Gefüge ausbildet. Deshalb werden Obergrenzen für diese Begleitelemente angegeben.

Im Rahmen der Erfindung liegen auch Fahrzeugteile, die aus dem erfindungsgemäßen Gußeisenwerkstoff hergestellt sind, wobei die Fahrzeugteile insbesondere ein Zylinderkopf, eine Bremsscheibe, eine Zylinderlaufbahn oder eine Zylinderbuchse sein kann.

Im Falle der Nutzung von Graugußbuchsen in Verbindung mit Aluminiumblöcken ist durch die sich bildende Schutzschicht eine verbesserte Anbindung zwischen dem Grauguß und dem Aluminiumwerkstoff beim Gießen festzustellen.

Nachfolgend wird die Erfindung anhand von Ausführungsbeispielen beschrieben.

### Ausführungsbeispiel 1:

Es wird ein Gußeisenwerkstoff hergestellt, der neben Fe als Basiselement
4,2 Gew.-% C
0,3 Gew.-% Si
5,9 Gew.-% Al
0,03 Gew.-% Bi
0,02 Gew.-% P
0,05 Gew.-% Cu
0,3 Gew.-% Mn
0,03 Gew.-% Sn
enthält.

Die Gesamtmenge aller restlichen Legierungselemente beträgt < 0,05 Gew.-%.

### Ausführungsbeispiel 2:

Es wird ein Gußeisenwerkstoff hergestellt, der neben Fe als Basiselement
3,28 bis 3,38 Gew.-% C
0,50 bis 0,60 Gew.-% Si
bis zu 0,04 Gew.-% P
0,080 bis 0,110 Gew.-% S
0,45 bis 0,55 Gew.-% Mn
0,15 bis 0,20 Gew.-% Cr
0,70 bis 0,80 Gew.-% Cu
bis zu 0,015 Gew.-% Ti
3,00 bis 3,30 Gew.-% Al
Maximal 30 ppm Blei
0,08 bis 0,10 Gew.-% Sn
enthält.

Die Gesamtmenge aller restlichen Legierungselemente beträgt < 0,05 Gew.-%.

### Ausführungsbeispiel 3:

Es wird ein Gußeisenwerkstoff hergestellt, der neben Fe als Basiselement
3,28 bis 3,38 Gew.-% C
1,20 bis 1,30 Gew.-% Si
bis zu 0,04 Gew.-% P
0,080 bis 0,110 Gew.-% S
0,45 bis 0,55 Gew.-% Mn
0,15 bis 0,20 Gew.-% Cr
0,70 bis 0,80 Gew.-% Cu
bis zu 0,015 Gew.-% Ti
3,50 bis 3,80 Gew.-% Al
maximal 30 ppm Blei
0,02 bis 0,03 Gew.-% Mo
0,09 bis 0,12 Gew.-% V
0,08 bis 0,10 Gew.-% Sn
enthält.

Die Gesamtmenge aller restlichen Legierungselemente beträgt < 0,05 Gew.-%.

## Patentansprüche

1. Ferritischer Gußeisenwerkstoff mit lamellarer Graphitausbildung, **dadurch gekennzeichnet, daß** der Gußeisenwerkstoff aus
3,0 bis 4,2 Gew.-% C,
0,3 bis 1,5 Gew.-% Si,
3,0 bis 7 Gew.-% Al,
bis zu 1,0 Gew.-% Cu,
bis zu 0,8 Gew.-% Mn,
bis zu 0,2 Gew.-% Sn,
bis zu 0,08 Gew.-% P,
und wenigstens einem weiteren Element ausgewählt aus der Gruppe bestehend aus
- 0,005 bis 0,03 Gew.-% Bi,
- 0,02 bis 0,15 Gew.-% S,
- 0,1 bis 0,3 Gew.-% Cr,
- bis zu 0,02 Gew.-% Ti,
- 0,01 bis 0,04 Gew.-% Mo,
- 0,06 bis 0,12 Gew.-% V und
- bis zu 40 ppm Pb
besteht, wobei der Rest der Zusammensetzung aus Fe besteht.

2. Gußeisenwerkstoff gemäß Anspruch 1, **dadurch gekennzeichnet, daß** der Gußeisenwerkstoff zwischen 0,01 und 0,02 Gew.-% Bi enthält.

3. Gußeisenwerkstoff gemäß Anspruch 1 oder Anspruch 2, **dadurch gekennzeichnet, daß** der Gußeisenwerkstoff zwischen 3,0 und 5,5 und bevorzugt zwischen 3,5 und 5 Gew.-% Al enthält.

4. Gußeisenwerkstoff gemäß einem der Ansprüche 1 bis 3, **dadurch gekennzeichnet, daß** der Gußeisenwerkstoff bis zu 0,06 und bevorzugt bis zu 0,04 Gew.-% P enthält.

5. Gußeisenwerkstoff einem der Ansprüche 1 bis 4, **dadurch gekennzeichnet, daß** der Gußeisenwerkstoff bis zu 0,8 und bevorzugt bis zu 0,6 Gew.-% Cu enthält.

6. Gußeisenwerkstoff gemäß einem der Ansprüche 1 bis 5, **dadurch gekennzeichnet, daß** der Gußeisenwerkstoff bis zu 0,6 und bevorzugt bis zu 0,4 Gew.-% Mn enthält.

7. Gußeisenwerkstoff gemäß einem der Ansprüche 1 bis 6, **dadurch gekennzeichnet, daß** der Gußeisenwerkstoff bis zu 0,15 und bevorzugt bis zu 0,1 Gew.-% Sn enthält.

8. Gußeisenwerkstoff gemäß einem der Ansprüche 1 bis 7, **dadurch gekennzeichnet, daß** der Gußeisenwerkstoff 0,04 bis 0,10 und bevorzugt 0,06 bis 0,08 Gew.-% S enthält.

9. Gußeisenwerkstoff gemäß einem der Ansprüche 1 bis 8, **dadurch gekennzeichnet, daß** der Gußeisenwerkstoff 0,15 bis 0,25 und bevorzugt 0,175 bis 0,20 Gew.-% Cr enthält.

10. Gußeisenwerkstoff gemäß einem der Ansprüche 1 bis 9, **dadurch gekennzeichnet, daß** der Gußeisenwerkstoff bis zu 0,017 und bevorzugt bis zu 0,015 Gew.-% Ti enthält.

11. Gußeisenwerkstoff gemäß einem der Ansprüche 1 bis 10, **dadurch gekennzeichnet, daß** der Gußeisenwerkstoff 0,015 bis 0,03, bevorzugt 0,02 bis 0,025 Gew.-% Mo enthält.

12. Gußeisenwerkstoff gemäß einem der Ansprüche 1 bis 11, **dadurch gekennzeichnet, daß** der Gußeisenwerkstoff 0,07 bis 0,11, bevorzugt 0,08 bis 0,10 Gew.-% V enthält.

13. Fahrzeugteil hergestellt aus einem Gußeisenwerkstoff gemäß den Ansprüchen 1 bis 12, wobei das Fahrzeugteil ein Zylinderkopf, eine Bremsscheibe, eine Zylinderlaufbahn oder eine Zylinderbuchse ist.

## Claims

1. Ferritic cast iron material with lamellar graphite formation, **characterized in that** the cast iron material consists of
3.0 to 4.2% by weight of C,
0.3 to 1.5 by weight of Si,
3.0 to 7 by weight of Al,
up to 1.0% by weight of Cu,
up to 0.8% by weight of Mn,
up to 0.2 by weight of Sn,
up to 0.08 by weight of P,
and at least one further element selected from the group consisting of
- 0.005 to 0.03 % by weight of Bi,
- 0.02 to 0.15 by weight of S,
- 0.1 to 0.3 by weight of Cr,
- up to 0.02 by weight of Ti,
- 0.01 to 0.04 by weight of Mo,
- 0.06 to 0.12% by weight of V and
- up to 40 ppm of Pb
the balance of the composition being Fe.

2. Cast iron material according to claim 1, **characterized in that** the cast iron material contains between 0.01 and 0.02 by weight of Bi.

3. Cast iron material according to claim 1 or claim 2, **characterized in that** the cast iron material contains between 3.0 and 5.5 and preferably between 3.5 and 5 by weight of Al.

4. Cast iron material according to any of claims 1 to 3, **characterized in that** the cast iron material contains up to 0.06 and preferably up to 0.04 by weight of P.

5. Cast iron material one of claims 1 to 4, **characterized in that** the cast iron material contains up to 0.8 and preferably up to 0.6 by weight of Cu.

6. Cast iron material according to one of claims 1 to 5, **characterized in that** the cast iron material contains up to 0.6 and preferably up to 0.4 by weight of Mn.

7. Cast iron material according to one of claims 1 to 6, **characterized in that** the cast iron material contains up to 0.15 and preferably up to 0.1 by weight of Sn.

8. Cast iron material according to one of claims 1 to 7, **characterized in that** the cast iron material contains 0.04 to 0.10 and preferably 0.06 to 0.08 by weight of S.

9. Cast iron material according to one of claims 1 to 8, **characterized in that** the cast iron material contains 0.15 to 0.25 and preferably 0.175 to 0.20 by weight of Cr.

10. Cast iron material according to any of claims 1 to 9, **characterized in that** the cast iron material contains up to 0.017 and preferably up to 0.015 by weight of Ti.

11. Cast iron material according to any of claims 1 to 10, **characterized in that** the cast iron material contains 0.015 to 0.03, preferably 0.02 to 0.025 by weight of Mo.

12. Cast iron material according to one of claims 1 to 11, **characterized in that** the cast iron material contains 0.07 to 0.11, preferably 0.08 to 0.10 by weight of V.

13. Vehicle part made of a cast iron material according to claims 1 to 12, wherein the vehicle part is a cylinder head, a brake disc, a cylinder raceway or a cylinder liner.

## Revendications

1. Matériau de fonte ferritique à graphite lamellaire, **caractérisé en ce que** le matériau de fonte est constitué de
3,0 à 4,2 % en poids de C,
0,3 à 1,5 % en poids de Si,
3,0 à 7 % en poids de Al,
jusqu'à 1,0 % en poids de Cu,
jusqu'à 0,8% en poids de Mn,
jusqu'à 0,2 % en poids de Sn,
jusqu'à 0,08 % en poids de P,
et d'au moins un autre élément choisi dans le groupe constitué par
- 0,005 à 0,03 % en poids de Bi,
- 0,02 à 0,15 % en poids de S,
- 0,1 à 0,3 % en poids de Cr,
- jusqu'à 0,02 % en poids de Ti,
- 0,01 à 0,04 % en poids de Mo,
- 0,06 à 0,12 % en poids de V et
- jusqu'à 40 ppm de Pb ,
le reste de la composition étant Fe.

2. Matériau de fonte selon la revendication 1, **caractérisé en ce que** le matériau de fonte contient entre 0,01 et 0,02 % en poids de Bi.

3. Matériau de fonte selon la revendication 1 ou 2, **caractérisé en ce que** le matériau de fonte contient entre 3,0 et 5,5 et de préférence entre 3,5 et 5 % en poids de Al.

4. Matériau de fonte selon l'une des revendications 1 à 3, **caractérisé en ce que** le matériau de fonte contient jusqu'à 0,06 et de préférence jusqu'à 0,04 % en poids de P.

5. Matériau de fonte selon l'une des revendications 1 à 4, **caractérisé en ce que** le matériau de fonte contient jusqu'à 0,8 et de préférence jusqu'à 0,6 % en poids de Cu.

6. Matériau de fonte selon l'une des revendications 1 à 5, **caractérisé en ce que** le matériau de fonte contient jusqu'à 0,6 et de préférence jusqu'à 0,4 % en poids de Mn.

7. Matériau de fonte selon l'une des revendications 1 à 6, **caractérisé en ce que** le matériau de fonte contient jusqu'à 0,15 et de préférence jusqu'à 0,1% en poids de Sn.

8. Matériau de fonte selon l'une des revendications 1 à 7, **caractérisé en ce que** le matériau de fonte contient 0,04 à 0,10 et de préférence 0,06 à 0,08 % en poids de S.

9. Matériau de fonte selon l'une des revendications 1 à 8, **caractérisé en ce que** le matériau de fonte contient 0,15 à 0,25 et de préférence 0,175 à 0,20 % en poids de Cr.

10. Matériau de fonte selon l'une quelconque des revendications 1 à 9, **caractérisé en ce que** le matériau de fonte contient jusqu'à 0,017 et de préférence jusqu'à 0,015 % en poids de Ti.

11. Matériau de fonte selon l'une des revendications 1 à 10, **caractérisé en ce que** le matériau de fonte contient de 0,015 à 0,03, de préférence de 0,02 à 0,025 % en poids de Mo.

12. Matériau de fonte selon l'une des revendications 1 à 11, **caractérisé en ce que** le matériau de fonte contient de 0,07 à 0,11, de préférence de 0,08 à 0,10 % en poids de V.

13. Pièce de véhicule en matériau de fonte selon les revendications 1 à 12, la pièce de véhicule étant une culasse, un disque de frein, une voie de cylindre ou une chemise de cylindre.
